Europäisches Patentamt

European Patent Office

Office européen des brevets

(11) Publication number: **0 168 640**
A2

# EUROPEAN PATENT APPLICATION

(21) Application number: 85107340.3

(22) Date of filing: 13.06.85

(51) Int. Cl.⁴: **G 01 K 1/02,** G 01 K 13/00

(30) Priority: 13.06.84 JP 122858/84

(43) Date of publication of application: 22.01.86
Bulletin 86/4

(84) Designated Contracting States: **AT BE CH DE FR GB IT LI LU NL SE**

(71) Applicant: **OMRON TATEISI ELECTRONICS CO., 10, Tsuchido-cho Hanazono Ukyo-ku, Kyoto 616 (JP)**

(72) Inventor: **Ishida, Junichi Patent Department, c/o OMRON TATEISI ELECTRONICS CO. Shimo-Kalinji, Nagaokakyo-Shi Kyoto (JP)**
Inventor: **Kobayashi, Toshiyuki Patent Department, c/o OMRON TATEISI ELECTRONICS CO. Shimo-Kalinji, Nagaokakyo-Shi Kyoto (JP)**
Inventor: **Miyake, Tamio Patent Department, c/o OMRON TATEISI ELECTRONICS CO. Shimo-Kalinji, Nagaokakyo-Shi Kyoto (JP)**

(74) Representative: **WILHELMS, KILIAN & PARTNER Patentanwälte, Eduard-Schmid-Strasse 2, D-8000 München 90 (DE)**

(54) Electronics thermometer detecting and displaying rising; falling, and stable temperature conditions.

(57) This electronic thermometer includes: a means for sensing a temperature to be measured and outputting an electrical signal representative thereof; a means for receiving this electrical signal, processing it, and storing values representative thereof over time; a means for determining from these stored values representing the electrical signal over time whether the temperature to be measured is rising, is dropping, or is relatively stable; a means for displaying a value representative of the current value of the electrical signal and thus of the temperature to be measured; and a means for displaying the result, as determined by the determining means, of whether the temperature to be measured is rising, is dropping, or is relatively stable. Thereby, the user can form an estimation as to whether the sensing means is properly being applied, and as to whether the conduction of temperature to said sensing means has properly stabilized sufficient to provide a reliable temperature indication. Accordingly, the reliability of temperature monitoring is very good.

OMRON TATEISI ELECTRONICS CO.

Kyoto / JAPAN

---

ELECTRONIC THERMOMETER DETECTING AND DISPLAYING
RISING, FALLING, AND STABLE TEMPERATURE
CONDITIONS

---

Priority: June 13, 1984 - JAPAN - No. 122858/1984

P 2565-EP

The present invention relates to the field of electronic thermometers, and in particular to an electronic thermometer which can display not only a temperature value but also the trend of change of said temperature value.

A conventional electronic thermometer, for instance an electronic clinical thermometer, is typically equipped with a digital display unit, and numerically displays the detected temperature value on this digital display unit. When measuring human body temperature, in the exemplary case of using an electronic clinical thermometer of this kind, after beginning the measurement by placing a sensor unit in or on a portion of the body of the patient (for instance, in said patient's armpit), the detected temperature initially rises sharply, but as the temperature equilibrium between the body portion and the sensor unit is approached and is about to be reached the change in the detected temperature value becomes more gradual. Also, if the sensor unit becomes displaced from the body portion, either intentionally or inadvertently, then the detected temperature value drops sharply. Therefore, in the use of a conventional electronic clinical thermometer which can only show the detected body temperature value as and by a numerical figure, the value shown on the display fluctuates, and it has been difficult to determine whether such a fluctuating temperature value is rising, is dropping, or is stable, since this is required to be detected only from the fluctuating numerical display, without any particular distinction being made between the temperature rising, the temperature dropping, and the temperature stable states. In the case of a peak hold type thermometer, on the other hand, the value shown on the display does not change even when the sensor unit is displaced from the body portion, so that the temperature detected by the sensor unit is dropping sharply and the shown temperature value would otherwise be dropping, and this effect can sometimes cause measurement errors, for example in the case that the temperature sensor unit becomes displaced from the relevant portion of the body of the patient before having attained substantial equilibrium with the temperature thereof.

0168640

- 3 -

## SUMMARY OF THE INVENTION

Accordingly, it is the primary object of the present invention to provide an electronic thermometer, which can avoid the above identified problems.

It is a further object of the present invention to provide such an electronic thermometer, which as well as detecting a temperature value and showing an indication thereof can also detect the trend of said temperature value and display an indication of said trend.

It is a further object of the present invention to provide such an electronic thermometer, which can show an indication of rising temperature value, of dropping temperature value, and of stable temperature value.

It is a yet further object of the present invention to provide such an electronic thermometer, which has an easily legible display system.

It is a yet further object of the present invention to provide such an electronic thermometer, which has a compact and simple display system.

It is a yet further object of the present invention to provide such an electronic thermometer, which is cheap.

It is a yet further object of the present invention to provide such an electronic thermometer, suitable for being used as a clinical thermometer.

It is a yet further object of the present invention to provide such an electronic clinical thermometer, which does not run any substantial risk of poor temperature equilibrium between its temperature sensor and the portion of the body of the patient whose temperature is being sensed giving rise to inaccurate temperature reading.

It is a yet further object of the present invention to provide such an electronic clinical thermometer, which does not run any substantial risk of premature displacement of its temperature sensor from the portion of the body of the patient whose temperature is being sensed giving rise to inaccurate temperature reading.

According to the most general aspect of the present invention, these and other objects are accomplished by an electronic thermometer, comprising:

(a) a means for sensing a temperature to be measured and outputting an electrical signal representative thereof; (b) a means for receiving said electrical signal representative of said temperature to be measured from said sensing means, processing it, and storing values representative thereof over time; (c) a means for determining from said stored values representing said electrical signal over time whether said temperature to be measured is rising, is dropping, or is relatively stable; (d) a means for displaying a value representative of the current value of said electrical signal and of said temperature to be measured; and (e) a means for displaying the result, as determined by said determining means, of whether said temperature to be measured is rising, is dropping, or is relatively stable.

According to such a structure, the user of the electronic thermometer of the present invention not only can see the current value of the temperature of the body to which the temperature sensing means is applied as displayed by the value displaying means, but can see an indication as displayed by the result displaying means as to whether the temperature value detected by the temperature sensing means is rising, is dropping, or is stable; and thereby the user can form an estimation as to whether the temperature sensing means is properly being applied to said body, and as to whether the conduction of temperature from said body to said temperature sensing means has properly stabilized sufficient to provide a reliable temperature indication on the value displaying means. Accordingly, the reliability of temperature monitoring is very good.

Further, according to a more particular aspect of the present invention, these and other objects are more particularly and concretely accomplished by an electronic thermometer as detailed above, wherein said result displaying means comprises a means for displaying rising temperature and a means for displaying dropping temperature which is separate from said means for displaying rising temperature; and wherein said result displaying means displays an indication that said temperature to be measured is relatively stable by operating both said means for displaying rising temperature and also said means for displaying dropping temperature; or, alternatively, wherein said result displaying means displays an indication that said temperature to be measured is relatively stable by operating neither said means for displaying rising temperature nor said means for displaying dropping temperature.

- 7 -

0168640

According to such alternative structures, the compactness of the display of the digital thermometer is enhanced, and its simplicity is improved, thus providing significant cost advantages.

**BRIEF DESCRIPTION OF THE DRAWINGS**

The present invention will now be shown and described with reference to the preferred embodiment thereof, and with reference to the illustrative drawings. It should be clearly understood, however, that the description of the embodiment, and the drawings, are all of them given purely for the purposes of explanation and exemplification only, and are none of them intended to be limitative of the scope of the present invention in any way, since the scope of the present invention is to be defined solely by the legitimate and proper scope of the appended claims. In the drawings, like parts and spaces and so on are denoted by like reference symbols in the various figures thereof; in the description, spatial terms are to be everywhere understood in terms of the relevant figure; and:

Fig. 1 is a schematic block diagram showing the overall structure of the preferred embodiment of the electronic thermometer of the present invention;

Fig. 2 is a schematic frontal view of said preferred embodiment, which in fact is a clinical thermometer;

Fig. 3 is a a block diagram of an electronic circuit unit of this electronic clinical thermometer;

Fig. 4 is a graph of measured temperature against time showing measured temperature along the vertical axis and time along the horizontal axis, for illustrating an exemplary operational episode of temperature measurement by this electronic clinical thermometer; and

Fig. 5 is a flow chart for further illustrating said episode of operation of this electronic clinical thermometer according to the preferred embodiment of the present invention.

DESCRIPTION OF THE PREFERRED EMBODIMENT

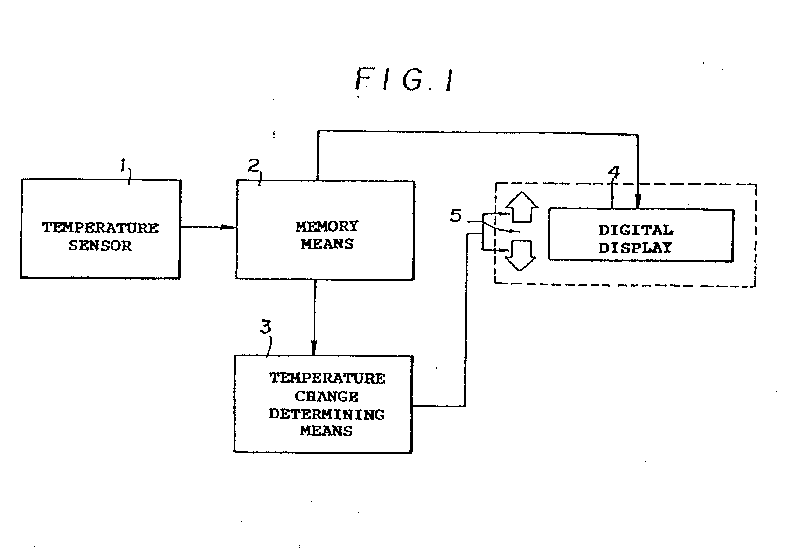

The present invention will now be described with reference to the preferred embodiment thereof, and with reference to the appended drawings. Fig. 1 is a schematic block diagram showing the overall structure of the preferred embodiment of the electronic thermometer of the present invention, and in this figure the reference numeral 1 denotes a temperature sensor which is approached to the object whose temperature to be measured - in this case, in practice, to a portion of the body of a patient, since this preferred embodiment in fact is a clinical thermometer - and which produces an electrical output signal representative of said temperature of said object, while 2 is a memory means for receiving the aforesaid electrical output signal from said temperature sensor 1 and for storing a value representative thereof on each occurrence of a timing pulse signal. And a temperature change determining means 3, according to the aforesaid sequential temperature data stored in the memory means 2, determines whether the detected value of the temperature is rising, is dropping, or is stable. The detected value of the temperature as output from the temperature sensor 1 is displayed on a digital display unit 4 which is visible to the user of the thermometer, and further on a temperature change condition display unit 5 there is displayed a symbolic indication as to whether the detected value of the temperature is rising, is dropping, or is stable, as determined by said temperature change determining means 3 and in response to an output signal therefrom. Thus, the user of this preferred embodiment of the electronic thermometer of the present invention not only can see the current value of the temperature of the relevant portion of the patient to which the temperature sensor 1 is applied as displayed on the digital display unit 4, but can see an indication on the temperature change condition display unit 5 as to whether the temperature value detected by the temperature sensor 1 is rising, is dropping, or is stable; and thereby the user can form an estimation as to whether the temperature sensor 1 is properly being applied to said relevant portion of the patient, and as to whether the conduction of temperature from said relevant portion of the patient to said temperature sensor 1 has properly stabilized sufficient to provide a reliable patient temperature indication on the digital display unit 4. Accordingly, the reliability of patient temperature monitoring is very good.

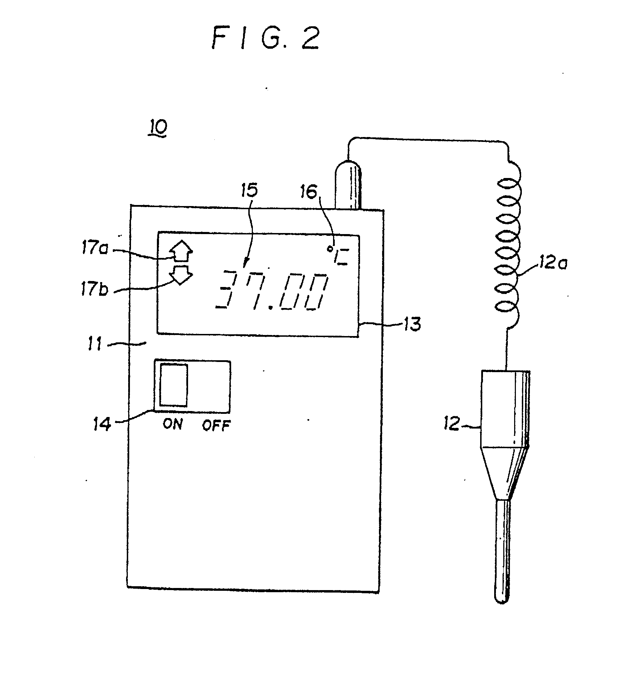

In Fig. 2, a schematic frontal view of said preferred embodiment of the present invention, which is a clinical thermometer, is shown. This electronic thermometer 10 has a main body casing 11 and a probe 12 which is electrically connected to said main body casing 11 by a wire 12a. The aforesaid temperature sensor 1 is not particularly shown, but is constituted as a thermistor or the like and is mounted near the end of the probe 12 and furnishes its signal to the main body casing 11 of the electronic thermometer via the

0168640

wire 12a. On·the exterior surface of the main body casing 11 there are provided a display unit 13 and an ON/OFF control switch 14, and various electronic circuit components such as a CPU and so on, to be detailed later in this specification, are provided within the main body casing 11.

The display unit 13 comprises a digital display 15 (which corresponds to the above described digital display unit 4) which shows two digits before and two digits after a decimal point, also comprises an indication 16 of degrees Celsius which shows the symbol "$^{\circ}$C", and further comprises two segments 17a and 17b for displaying symbolic indications corresponding to whether the temperature value detected by the temperature sensor 1 is rising, is dropping, or is stable, as will be explained hereinafter in detail (these two segments 17a and 17b correspond to the above described temperature change condition display unit 5). The segment 17a is shaped as an arrow symbol pointing upwards, and as will be detailed later when this segment 17a alone is illuminated this is to be taken as an indication of a rising temperature as detected by the temperature sensor 1; and the segment 17b is shaped as an arrow symbol pointing downwards, and as will be detailed later when this segment 17b alone is illuminated this is to be taken as an indication of a dropping temperature as detected by the temperature sensor 1. And, as will be detailed later, when both of the segments 17a and 17b are illuminated together this is to be taken as an indication of a stable temperature as detected by the temperature sensor 1.

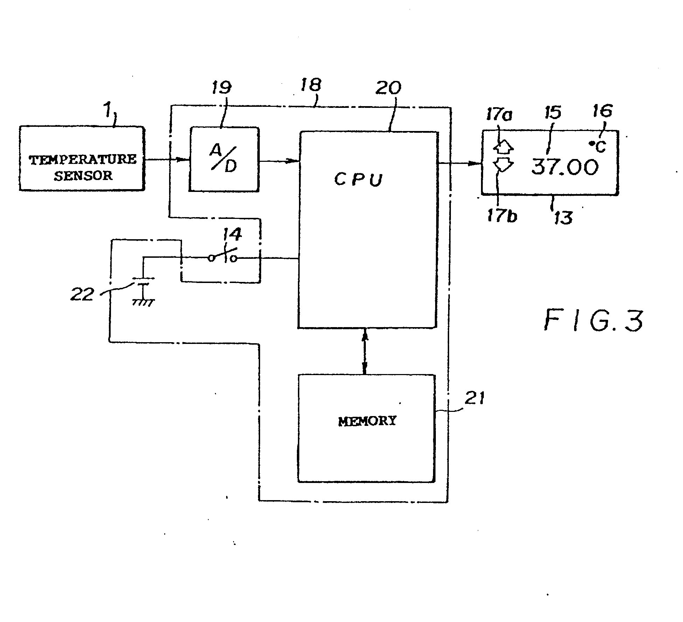

In Fig. 3 there is shown a block diagram of the electronic circuit unit 18 of this electronic clinical thermometer according to the preferred embodiment of the present invention. This electronic circuit unit 18 comprises an A/D converter 19, a CPU 20, a memory 21, and a battery 22. The temperature sensor 1 converts the temperature to which it is subjected to an analog electrical signal, and this signal is fed in to the input side of the A/D converter 19 and is converted at each one of determinate sampling instants into a digital signal amenable for processing by the CPU 20 to which it is sent. The CPU 20, which is of a per se known sort, operates according to a program stored in advance in a ROM or the like, and as will be explained later has the functions of: measuring the temperature at each sampling instant; storing the result in the memory 21 in an appropriate memory location; reading out a temperature value from the memory 21 in a time sequential manner to display said temperature value on the digital display unit 15 of the display unit 13; determining whether the measured temperature is rising, is dropping, or is stable; and displaying an indication of said temperature alteration condition on the temperature change condition display unit 5, which consists in this preferred embodiment of the segments 17a and 17b included on the display unit 13.

In the memory means 21, although it is not particularly so shown in any of the figures, there are provided memory locations $T(0)$, $T(-1)$, $T(-2)$, ..... $T(-n)$, where n is some determinate value. $T(0)$ is for storing the current value of the temperature as detected by the temperature sensor 1, $T(-1)$ is for storing the previous such detected temperature value, $T(-2)$ is for storing the such detected temperature value before said previous detected temperature value, and, in general, $T(-r)$ is for storing the rth previous such detected temperature value, counting backwards from the present value.

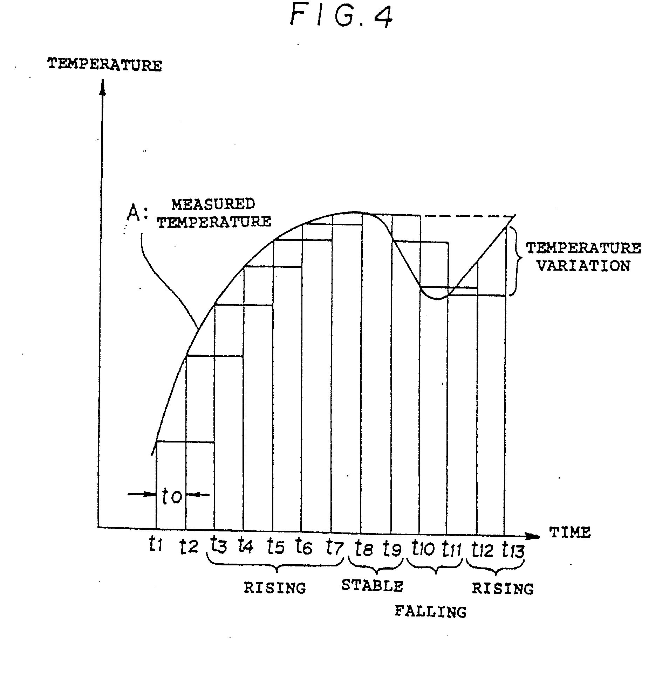

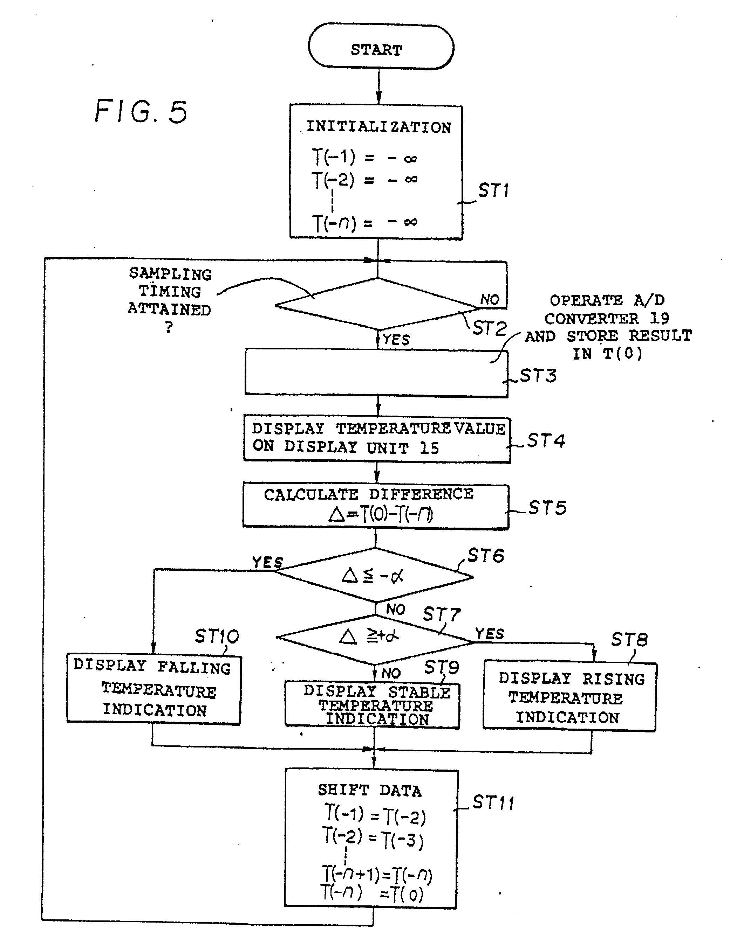

In Fig. 5 there is shown a flow chart illustrating the operation of this electronic clinical thermometer according to the preferred embodiment of the present invention, and, with reference to this flow chart and to the graph of temperature against time given in Fig. 4, this operation will now be explained.

First, after the power switch 14 is turned ON which causes the program to start in the START block, in the step ST1 the initialization of the memory means 21 is performed, and in this case all the locations T(0), T(-1), T(-2), ..... T(-n) of the memory means 21 are set to minus infinity, i.e. to the greatest negative value available in the data representation which is being used for the memory means 21. And next a cycle is entered and the step ST2 is reached.

In this cycle, first in the step ST2 a test is made as to whether or not the timing for sampling has currently been attained, or not; if not, then the flow of control loops round in a tight loop, to return to this step ST2 again. However, when the timing for sampling is in fact currently attained, then the flow of control passes to the step ST3.

In this step ST3, the A/D converter 19 is operated by the CPU 20, a digital value is produced therefrom representing the current value of the analog signal which is being output by the temperature sensor 1, and this digital value is stored in the memory location T(0) of the memory means 21. And, in the next step ST4, a temperature value is displayed on the display unit 15 of the display 13. The actual displayed value may be this value just obtained from the A/D converter 19, which is the currently measured value of temperature, or may be the maximum such value obtained up to the present, in the case of a so called peak hold type thermometer.

In the next step ST5, the difference delta which is equal to $T(0) - T(-n)$, i.e. the difference between the present detected temperature value and the temperature value detected n repetitions earlier, is calculated. This difference delta indicates how much the temperature value has changed over n sampling periods. When this difference delta is greater than a predetermined positive value +alpha, this will be taken as a criterion for deciding that the temperature is rising; when this difference delta is less than (taking all quantities as signed real numbers) the negative of this predetermined value, i.e. -alpha, this will be taken as a criterion for deciding that the temperature is falling; and, when this difference delta is between +alpha and -alpha, this will be taken as a criterion for deciding that the temperature is stable and is neither significantly rising nor significantly falling. In other words, taking the length of a sampling period as t0, if the change in measured temperature in the last n sampling periods is delta, then, calling (alpha/(n.to)) the temperature change coefficient beta: for (delta/(n.to)) to be greater than this temperature change coefficent beta means that the temperature is rising; for $(delta/(n.to))$ to be less than minus this temperature change coefficent, i.e. -beta, means that the temperature is falling; and for $(delta/(n.to))$ to be between this temperature change coefficent beta and -beta means that the temperature is stable. Therefore, with reference to the particular example of operation shown in Fig. 4 as a graph of measured temperature against time for the time sampling periods t1 through t13, and assuming that n is equal to 2 in this case, then the difference delta in the step ST5 may be computed, and: because delta is greater than +alpha for the sampling times t3 through t7 this means that the temperature is taken as rising in this interval; because delta is less than +alpha and greater than -alpha for the sampling times t8 through t9 this means that the temperature is taken as stable in this interval; because delta is less than -alpha for the sampling times t10 through t11 this means that the temperature is taken as falling in this interval; and because delta is again greater than +alpha for the sampling times t12 through t13 this means that the temperature is again taken as rising in this interval.

In the flow chart of Fig. 5, thus, every time the difference delta is computed in the step ST5, it can be determined whether or not this delta is equal to or smaller than -alpha, and also whether or not this delta is equal to or greater than +alpha, thereby allowing a determination as to whether the temperature is rising, is falling, or is stable; and a symbolic indication of this temperature variation condition is to be displayed. In detail: in the step ST6, a decision is made as to whether delta is equal to or smaller than -alpha, or not. If the result of this decision is YES, then the flow of control passes next to the step ST10; whereas, if the result of this decision is NO, then the flow of control passes next to the step ST7, in which a decision is made as to whether delta is equal to or greater than +alpha, or not. If the result of this decision is YES, then the flow of control passes next to the step ST8; whereas, if the result of this decision is NO, then the flow of control passes next to the step ST9. In the step ST8, if this program point is reached it has been determined that delta is greater than +alpha, and as explained above this means that the temperature is to be taken as rising, so a rising temperature indication is displayed upon the display unit 15 of the display 13 - in this preferred embodiment of the present invention, this is done by lighting up the display segment 17a which consists of an upward pointing arrow - and then the flow of control proceeds to the step ST11. In the step ST10, on the other hand, if this program point is reached it has been determined that delta is less than -alpha, and as explained above this means that the temperature is to be taken as falling, so a falling temperature indication is displayed upon the display unit 15 of the display 13 - in this preferred embodiment of the present invention, this is done by lighting up the display segment 17b which consists of a downward pointing arrow - and then again the flow of control proceeds to the step ST11. And, finally, in the step ST9, if this program point is reached it has been determined that delta is less than +alpha and is greater than than -alpha, and as explained above this means that the temperature is to be taken as stable since it has been altering for only a small amount, so a stable temperature indication is displayed upon the display unit 15 of the display 13 - in this preferred embodiment of the present invention, this is done by lighting up both the upward pointing arrow display segment 17a and also the downward pointing arrow display segment 17b - and then again the flow of control proceeds to the step ST11.

In the step ST11, to which as just detailed the flow of control converges from the three branches explained above, a data shift is performed, making the present rth data value into the (r+1)th so as to leave room for the next data value; in other words, the stored data in the memory areas T(0), T(-1), T(-2), ..... T(-n) is shifted circularly, so that the data which was in the memory location T(0) is now stored in the memory location T(-1), the data which was in the memory location T(-1) is now stored in the memory location T(-2), and so on, and the data which was in the memory location T(-n+1) is now stored in the memory location T(n), while the data which was in the memory location T(-n) is now stored in the memory location T(0). And the flow of control next returns to the step ST2, to repeat the cycle above described at the next sampling time (as determined in the step ST3) and to make another temperature sampling.

As described above, according to the electronic clinical thermometer of this shown preferred embodiment of the present invention, because not only the measured body temperature is displayed on the digital display unit 15 but also it is selectively displayed whether the current measured temperature is rising, stable, or dropping, by the above explained use of the segments 17a and 17b, the user can make judgements as to whether the temperature is rising or not, and whether the temperature has reached a stable state and the temperature measurement may be terminated, or not, and whether the temperature is dropping and the resumption of measurement is possible, or not.

In the above described preferred embodiment, the segments 17a and 17b for indicating that the temperature is rising or dropping were shaped like arrows, but other symbols may be used for indicating rising or dropping temperature. And, in the above described preferred embodiment, as a means for indicating stable temperature, both the segments 17a and 17b were lighted up, but it is also possible to indicate a stable temperature by not lighting either one of the segments 17a and 17b. Further, the manner in which the segments are displayed may not necessarily be continuous in time, but as an alternative they may also be lighted in a flashing manner. Yet further, in the above described preferred embodiment, in order to indicate a stable temperature both the segments 17a and 17b were used and were illuminated, but it would be also possible to use an independent segment for indicating stable temperature, and this independent segment may be located between the segments 17a and 17b or may be located in another location. And, even yet further, although in the above described preferred embodiment the segments 17a and 17b for indicating the temperature changing state were provided with the digital display unit 15 and the degrees Celsius display unit 16 in the display unit 13, it would be also possible to provide these temperature changing state display means separately from and near the display unit 13. Accordingly, although the present invention has been shown and described with reference to the preferred embodiment thereof, and in terms of the illustrative drawings, it should not be considered as limited thereby, since as detailed above arious possible modifications, omissions, and alterations could be conceived of by one skilled in the art to the form and the content of any particular embodiment, without departing from the scope of the present invention. Therefore it is desired that the scope of the present invention, and of the protection sought to be granted by Letters Patent, should be defined not by any of the perhaps purely fortuitous details of the shown preferred embodiment, or of the drawings, but solely by the scope of the appended claims, which follow.

0168640

WHAT IS CLAIMED IS:

1.   An electronic thermometer, comprising:

(a)   a means for sensing a temperature to be measured and outputting an electrical signal representative thereof;

(b)   a means for receiving said electrical signal representative of said temperature to be measured from said sensing means, processing it, and storing values representative thereof over time;

(c)   a means for determining from said stored values representing said electrical signal over time whether said temperature to be measured is rising, is dropping, or is relatively stable;

(d)   a means for displaying a value representative of the current value of said electrical signal and of said temperature to be measured;

and

(e)  a means for displaying the result, as determined
by said determining means, of whether said temperature
to be measured is rising, is dropping, or is relatively
stable.

2.   An electronic thermometer according to claim 1,
wherein said result displaying means comprises a means
for displaying rising temperature, a means for
displaying dropping temperature, and a means for
displaying relatively stable temperature which is
separate from said means for displaying rising
temperature and said means for displaying dropping
temperature.

3.   An electronic thermometer according to claim 1,
wherein said result displaying means comprises a means
for displaying rising temperature and a means for displaying dropping temperature which is separate from said means for displaying rising temperature, and wherein said result displaying means displays an indication that said temperature to be measured is relatively stable by operating both said means for displaying rising temperature and also said means for displaying dropping temperature.

4. An electronic thermometer according to claim 1, wherein said result displaying means comprises a means for displaying rising temperature and a means for displaying dropping temperature which is separate from said means for displaying rising temperature, and wherein said result displaying means displays an indication that said temperature to be measured is relatively stable by operating neither said means for displaying rising temperature nor said means for displaying dropping temperature.

*F I G. 1*

# F I G. 2

P 2565- 0168640

FIG. 3

# FIG. 4

TEMPERATURE

A: MEASURED TEMPERATURE

TEMPERATURE VARIATION

$t_0$

TIME

$t_1$  $t_2$  $t_3$  $t_4$  $t_5$  $t_6$  $t_7$  $t_8$  $t_9$  $t_{10}$  $t_{11}$  $t_{12}$  $t_{13}$

RISING    STABLE    RISING

FALLING

*FIG. 5*

```
                        ┌─────────────┐
                        │    START    │
                        └──────┬──────┘
                               │
                    ┌──────────▼──────────┐
                    │   INITIALIZATION    │
                    │                     │
                    │   T(-1) = - ∞       │
                    │   T(-2) = - ∞       │──── ST1
                    │       ┆             │
                    │   T(-n) = - ∞       │
                    └──────────┬──────────┘
```

SAMPLING TIMING ATTAINED ? — ST2 — NO → OPERATE A/D CONVERTER 19 AND STORE RESULT IN T(0)

YES

ST3

| DISPLAY TEMPERATURE VALUE ON DISPLAY UNIT 15 | ST4 |

CALCULATE DIFFERENCE
$\Delta = T(0) - T(-n)$ — ST5

ST6 $\Delta \leq -\alpha$

YES → DISPLAY FALLING TEMPERATURE INDICATION (ST10)

NO

ST7 $\Delta \geq +\alpha$

YES → DISPLAY RISING TEMPERATURE INDICATION (ST8)

NO — ST9 → DISPLAY STABLE TEMPERATURE INDICATION

SHIFT DATA
$T(-1) = T(-2)$
$T(-2) = T(-3)$
$T(-n+1) = T(-n)$
$T(-n) = T(0)$ — ST11